# EUROPÄISCHE PATENTSCHRIFT

(11) **EP 2 101 073 B1**
(45) Veröffentlichungstag und Bekanntmachung des Hinweises auf die Patenterteilung: **27.04.2011**
(21) Anmeldenummer: 08004832.5
(22) Anmeldetag: 14.03.2008
(51) Int. Cl.: F16D 23/14

(54) **Ausrückvorrichtung für eine Reibungskupplung eines Kraftfahrzeuges mit einer mehrteiligen Schiebehülse**
Disengaging device for a friction clutch of a motor vehicle with a multi-part sliding sleeve
Dispositif de débrayage pour un embrayage à friction d'un véhicule automobile doté d'un manchon coulissant en plusieurs parties

(43) Veröffentlichungstag der Anmeldung: 16.09.2009
(73) Patentinhaber: ZF Friedrichshafen AG, 88038 Friedrichshafen (DE)
(72) Erfinder: Reuter, Klaus, 97723 Oberthulba (DE); Obergfell, Ralf, 97497 Dingolshausen (DE)

(56) Entgegenhaltungen:
- EP-A- 1 830 094
- FR-A- 2 836 969
- JP-A- 2001 241 465
- US-B1- 6 702 085

## Beschreibung

Die vorliegende Erfindung betrifft eine Ausrückvorrichtung für eine Reibungskupplung eines Kraftfahrzeuges gemäß dem Oberbegriff des Patentanspruchs 1.

Eine solche Ausrückvorrichtung ist bereits aus der JP 2001 241465 A bekannt, wobei dort die Schiebehülse ein einteiliges, aus Kunststoff ausgeführtes hülsenförmiges Trägerelement mit einem von diesem abstehenden Radialflansch umfasst. Der Anlagebereich für den Kupplungshebel ist dabei als ein separates kreisscheibenförmiges Blechumformteil gestaltet, das gemäß einer Ausführungsform als Anbauteil an dem Radialflansch befestigt wird.

Bekanntermaßen erfordert eine Ausrückvorrichtung zur Betätigung einer Kraftfahrzeugreibungskupplung für jede Fahrzeugplattform eine Einzelfestlegung. Das bedeutet, dass die Ausrückvorrichtung je nach technischer Spezifikation der Kupplung, der zu deren Betätigung erforderlichen Ausrückkräfte und dem in einem Antriebsstrang zur Verfügung stehenden Bauraum speziell ausgelegt und dimensioniert werden muss. Insbesondere variieren dabei das zwischen den Anlagebereichen von Kupplungshebel bzw. Kupplungsgabel und dem Angriffspunkt des Kupplungsbetätigungsorgans, z.B. den Zungenenden einer Membranfeder, vorgegebene Längenmaß, der Innendurchmesser der Schiebehülse sowie die Breite des Anlagebereichs des Kupplungshebels an der Schiebehülse. Beispielsweise sind zur Darstellung von Ausrückvorrichtungen mit verschiedenen Einbaubaulängen selbst bei gleichem Innendurchmesser der Schiebehülse, gleicher Breite des Anlagebereichs für den Kupplungshebel und gleicher Ausrücklagergeometrie eine Mehrzahl unterschiedlicher Schiebehülsen erforderlich, die sich lediglich in dem vorgenannten Längenmaß unterscheiden. Daraus resultiert eine erhebliche und mit hohen Werkzeugkosten verbundene Teilevielfalt.

Die Erfindung stellt sich von diesem Problem ausgehend die Aufgabe, eine Ausrückvorrichtung bereitzustellen, die die Teilevielfalt und die damit einhergehenden Kosten reduziert.

Die vorstehend genannte Aufgabe wird gelöst durch eine gattungsgemäße Ausrückvorrichtung mit den kennzeichnenden Merkmalen des Patentanspruchs 1.

Die Lösung sieht demnach eine Ausrückvorrichtung für eine Reibungskupplung eines Kraftfahrzeuges vor, bei dem das Anbauelement zur Darstellung des Anlagebereichs für das Betätigungslement als Kunststoffteil ausgeführt ist.

Durch diese Bauweise wird die Schiebehülse konstruktiv und funktional aufgeteilt in einen ersten Teilbereich, welcher bei mehreren unterschiedlich gestalteten Ausrückvorrichtungen identisch ist und in einen zweiten Teilbereich, welcher bei mehreren unterschiedlich gestalteten Ausrückvorrichtungen verschiedenartig ausgebildet ist. Das heißt, eine erfindungsgemäße Ausrückvorrichtung kann zur Bildung der Schiebehülse in diesem Fall ein, für jeden unterschiedlichen Typ einer Ausrückvorrichtung identisches Trägerelement umfassen, welches mit zumindest einem, je nach spezieller Vorgabe erforderlichen Kunststoff-Anbauelement zusammengefügt wird. Natürlich können umgekehrt auch identische Kunststoff-Anbauelemente mit unterschiedlichen Trägerelementen zu einer Schiebehülse kombiniert werden.

Es ist mit der vorgeschlagenen Lösung nunmehr insbesondere möglich, die bei verschiedenartigen Ausrückvorrichtungen auftretende Varianz im Innendurchmesser der Führungshülse, der Breite und/oder der axialen Erstreckung des Anlagebereichs des Kupplungshebels oder der Einbaulänge nur durch eine der beiden Schiebehülsenteile darzustellen, während das andere Teil, also entweder das Trägerelement oder das Kunststoff-Anbauelement unverändert beibehalten werden kann.

Selbstverständlich ist die erfindungsgemäße mehrteilige Ausführung der Schiebehülse nicht auf eine Zweiteiligkeit beschränkt, vielmehr kann eine Schiebehülse auch aus drei oder noch mehreren Teilen zusammengefügt werden. Auf diese Weise wird ein Teile-Baukasten zur Darstellung von verschiedenen Ausrückvorrichtungen bereitgestellt, wobei eine hohe Anzahl von Gleichteilen verbaut werden kann.

Die Unteransprüche beschreiben vorteilhafte Ausgestaltungen und Weiterbildungen der Erfindung.

Gemäß einer ersten vorteilhaften Ausgestaltung der Erfindung wird vorgeschlagen, das Trägerelement mit einem zur Anordnung auf dem Führungsrohr vorgesehenen Kunststoffkörper auszubilden. Zur Erzielung einer hohen Maßhaltigkeit, Temperaturfestigkeit und günstiger Gleiteigenschaften eignet sich als Werkstoff insbesondere ein Duroplast oder aber auch ein wärmebeständiges Thermoplast, wie z.B. Polyamid.

Es ist weiterhin auch von Vorteil, das Trägerelement als Kunststoff-Metall-Verbundteil auszuführen, um an hochbeanspruchten Bereichen durch implementierte Metallelemente eine weitere Versteifung der Schiebehülse zu erzielen.

Der unmittelbar im Betätigungskraftfluss liegende Radialflansch zur Aufnahme des Ausrücklagers wird mit Vorteil anstelle eines für den Führungsbereich vorgesehenen in der Regel spröden Duroplastwerkstoffs aus einem metallischen Werkstoff, beispielsweise einer Stahlscheibe gefertigt, welche mit dem Kunststoff zumindest teilweise umspritzt bzw. umgossen werden kann. Die Werkstoffauswahl kann somit angepasst an die jeweilige Funktion eines Schiebehülsenabschnittes erfolgen. Das Metallteil allgemein oder der metallische Radialflansch kann auch vollständig von einem Kunststoff umschlossen sein, wodurch an der Schiebehülse Korrosionserscheinungen durch in der Getriebeglocke eingeschlossene Feuchtigkeit sicher vermieden werden.

Das an dem Radialflansch festgelegte Kunststoff-Anbauelement befindet sich im montierten Zustand der Ausrückvorrichtung axial zwischen dem Radialflansch und dem Betätigungselement, so dass das Kunststoff-Anbauelement beim Betätigen der Kupplung im Wesentlichen mit einer Axialkraft beaufschlagt wird.

Zur verliersicheren Anordnung des Kunststoff-Anbauelements an der Schiebehülse, genauer an dem Trägerelement, wird vorgeschlagen, dieses dort mittels einer Rastverbindung zu befestigen. Hierfür bieten sich dem Fachmann eine Vielzahl bekannter Lösungen, z.B. verschwenkbare Rasthaken o.ä. an.

Zur Ausbildung von verschwenk- oder verformbaren Rastelementen an dem Kunststoff-Anbauelement wird dieses mit Vorteil aus einem zumindest etwas elastischen Werkstoff, z.B. einem Thermoplastwerkstoff gefertigt.

Zur Bildung einer vormontierten Einheit einer Ausrückvorrichtung mit einem Betätigungselement, d.h. einem Ausrückhebel oder einer Ausrückschwinge, umfasst das Kunststoff-Anbauelement eine Haltevorrichtung zu dessen verliersicheren Anordnung. Diese Haltevorrichtung kann günstigerweise auch als Schnapp- oder Rastverbindung ausgeführt sein, so dass die Vormontage schnell und werkzeugfrei erfolgen kann.

Das Kunststoff-Anbauelement kann einteilig oder aber auch zweiteilig ausgeführt sein, wobei die beiden Teile zur Anlage den zwei Auflageabschnitten eines Betätigungselementes symmetrisch zur Mittelachse an der Schiebehülse angeordnet sind.

Der Anlagebereich eines Kunststoff-Anbauelements oder die Anlagebereiche der Kunststoff-Anbauteile sind mit besonderem Vorteil konvex gewölbt ausgeführt, wodurch eine nahezu reibungsfreie Abwälzbewegung des Betätigungselementes ermöglicht wird.

Zusätzlich ergeben sich durch die vorgeschlagene Lösung zahlreiche vorteilhafte Montagemöglichkeiten. Die Ausrückvorrichtung kann beispielsweise bereits von einem Zulieferer ggf. in Baueinheit mit einem Kupplungshebel montiert und an einen Fahrzeughersteller als Fertigware geliefert werden. Es besteht jedoch auch die weitere Möglichkeit, die Ausrückvorrichtung mit der erfindungsgemäßen mehrteiligen Schiebehülse als unmontierte Komponenten einem Kunden bereitzustellen, welcher dann in Abhängigkeit von dem jeweils zu bestückenden Fahrzeug die Montage der Schiebehülse und damit der Ausrückvorrichtung vornimmt. Diese Variante ist zum Beispiel sinnvoll, um beim Einbau der Ausrückvorrichtung im Fahrzeug durch Variation eines der Schiebehülsenteile Toleranzen am Einbauort auszugleichen. Des Weiteren kann die Mehrteiligkeit der Schiebehülse vorteilhaft ausgenutzt werden, um der sich bei einem Belagverschleiß der Kupplung einstellenden Verlagerung des Ausrückhubes zu kompensieren. Hierzu kann bei einem Serviceaufenthalt des Fahrzeuges die mehrteilige Schiebehülse der Ausrückvorrichtung demontiert und anschließend wieder zusammengesetzt werden, wobei durch die entsprechende Elementeauswahl nunmehr eine andere Einbaulänge, die sich von der vorherigen unterscheidet, realisiert wird. Gleichfalls bietet sich die Möglichkeit, nur das verschlissene Schiebehülsenteil auszutauschen und das andere, noch funktionsfähige Schiebehülsenteil beizubehalten.

Im Folgenden wird die Erfindung anhand der beigefügten Figuren beispielhaft erläutert. Es zeigen:
- Fig. 1: eine Axialschnittdarstellung einer Ausrückvorrichtung mit einer mehrteili- gen Schiebehülse;
- Fig. 2a: eine Darstellung einer Schiebehülse, umfassend ein Trägerelement und ein zweiteiliges Anbauelement vor deren Montage;
- Fig. 2b: eine perspektivische Darstellung einer Schiebehülse, umfassend ein Trä- gerelement und ein zweiteiliges Anbauelement nach erfolgter Montage;
- Fig. 3: ein einzelnes, zur Montage an einem Trägerelement vorgesehenes Anbau- element;
- Fig. 4: eine perspektivische Darstellung einer montierten Ausrückvorrichtung;
- Fig. 5: eine Ansicht einer aus der Ausrückvorrichtung und einem Kupplungshebel gebildeten vormontierten Baueinheit;
- Fig. 6: eine Darstellung einer zu Fig. 2 alternativen Verbindung von Trägerelement und Anbauelement.

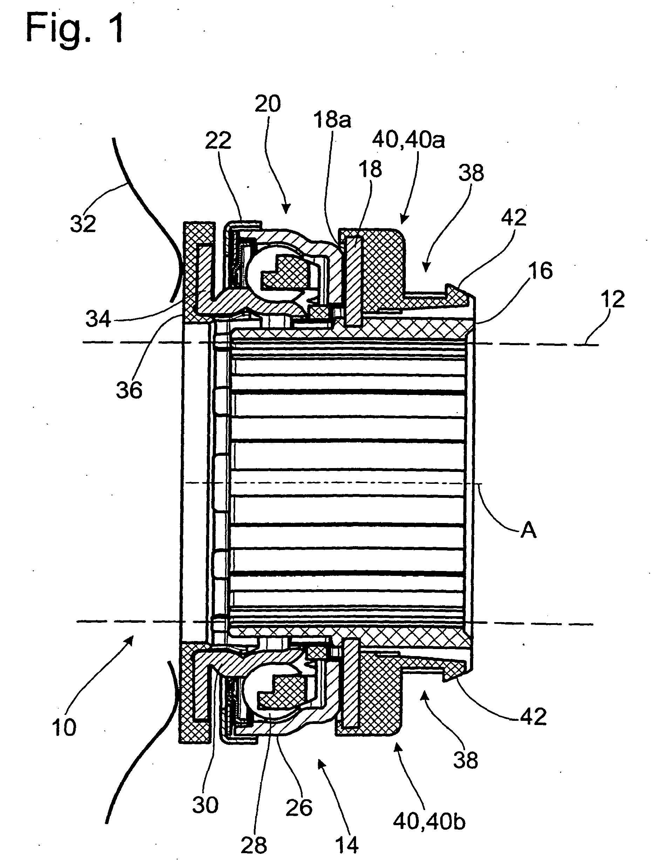

Fig. 1 zeigt eine Ausrückvorrichtung 10 für eine hier zeichnerisch nicht dargestellte Reibungskupplung eines Kraftfahrzeuges in einem Axialschnitt, die zunächst ein als Strichlinie angedeutetes Führungsrohr 12 und eine auf diesem axial verlagerbare, mehrteilige Schiebehülse 14 umfasst. Die Schiebehülse 14 ist als Metall-Kunststoff-Verbundbauteil ausgeführt und weist ein aus einem Duroplastwerkstoff hergestelltes Trägerelement 16 zu deren Führung auf dem Führungsrohr 12 mit einem an dessen Außenumfang eingefassten metallischen, aus Stahl gefertigten Radialflansch 18 auf, welcher einen Aufnahmebereich 18a zur Aufnahme des Ausrücklagers 20 bereit stellt.

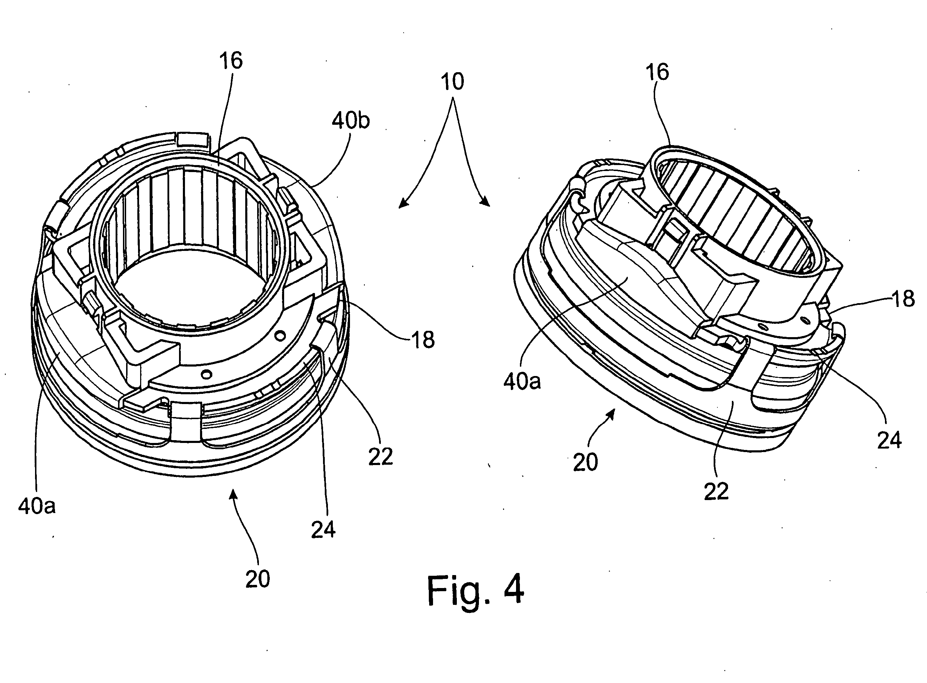

Es ist erkennbar, dass der Radialflansch 18 zumindest in dessen radial inneren Bereich von dem Kunststoff des Trägerelementes 16 eingefasst ist, was durch Anspritzen des Trägerelementes 16 an eine, den Radialflansch 18 bildende Stahlscheibe erfolgen kann. Das Ausrücklager 20 ist mittels einer in Fig. 1 nur teilweise sichtbaren Halteklammer 22 am Radialflansch 18 angeordnet, die dazu einen dort ausgebildeten unterbrochenen Ringkragen 24 (siehe Fig. 4) stellenweise umgreifen kann. Das Ausrücklager 20 umfasst im Detail einen drehfest zu der Schiebehülse 14 angeordneten ersten, hierbei äußeren Lagerring 26, Wälzkörper 28 und einem umlaufenden zweiten, hierbei inneren Lagerring 30, der mit einem Betätigungsorgan 32 der Reibungskupplung in Wirkverbindung steht. Der Innenring 30 ist über das axiale Ende des Trägerelementes 16 hinausstehend ausgebildet und bildet einen Radialflansch 34 aus, an den sich über eine Kunststoff-Anlaufscheibe 36 das Betätigungsorgan 32 der Reibungskupplung, z.B. eine Membranfeder, zur Übertragung einer Ausrückkraft anlegen kann.

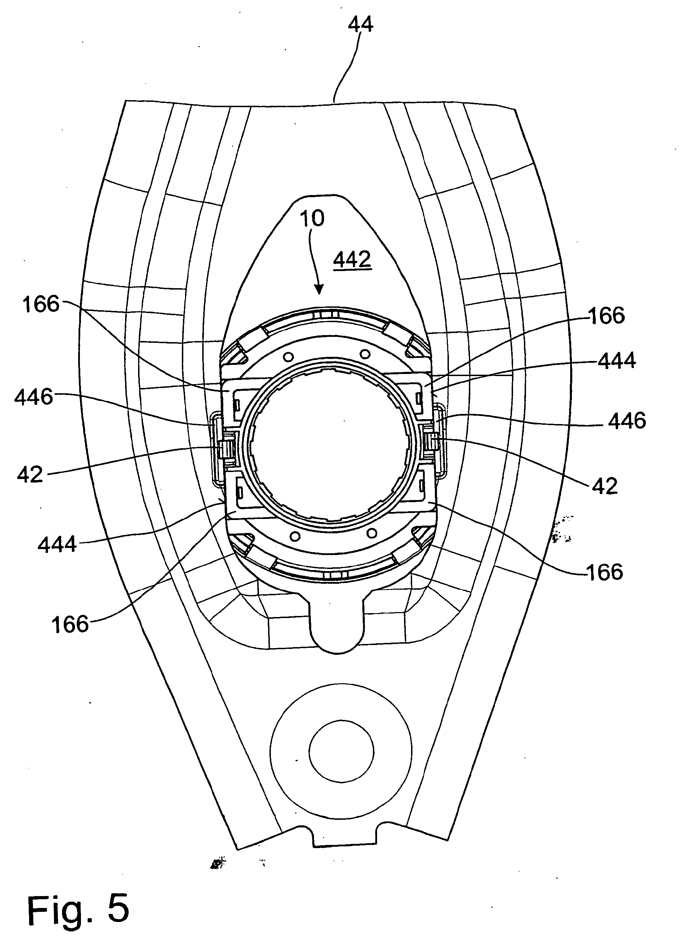

Auf der dem Ausrücklager 20 am Radialflansch 18 gegenüberliegenden Seite ist ein Anlagebereich 38 für ein Betätigungselement 44 vorgesehen, über welches eine Betätigungskraft zur Betätigung der Reibungskupplung eingeleitet werden kann. Dieser Anlagebereich 38, der auf zwei an der Ausrückachse A gegenüberliegenden Seiten der Ausrückvorrichtung 10 ausgebildet ist, ist an einem an der Schiebehülse 14 montierbaren, hier zweiteilig ausgeführten Anbauelement 40 ausgebildet, welches am Radialflansch 18 befestigt und dort verliersicher durch eine Rastverbindung gehalten wird, wie dieses anhand der weiteren Figuren noch detailliert beschrieben wird. Es sind an dem Anbauelement 40 bzw. an dessen Anbauteilen 40a,b ferner in axialer Richtung abstehende, verschwenkbare Rasthaken 42 erkennbar, die einen Teil einer Haltevorrichtung zur verliersicheren Anordnung des Kupplungshebels 44 (siehe Fig. 5) darstellen und somit zur Bildung einer vormontierten Baueinheit, bestehend aus der Ausrückvorrichtung 10 und dem Kupplungshebel 44, dienen.

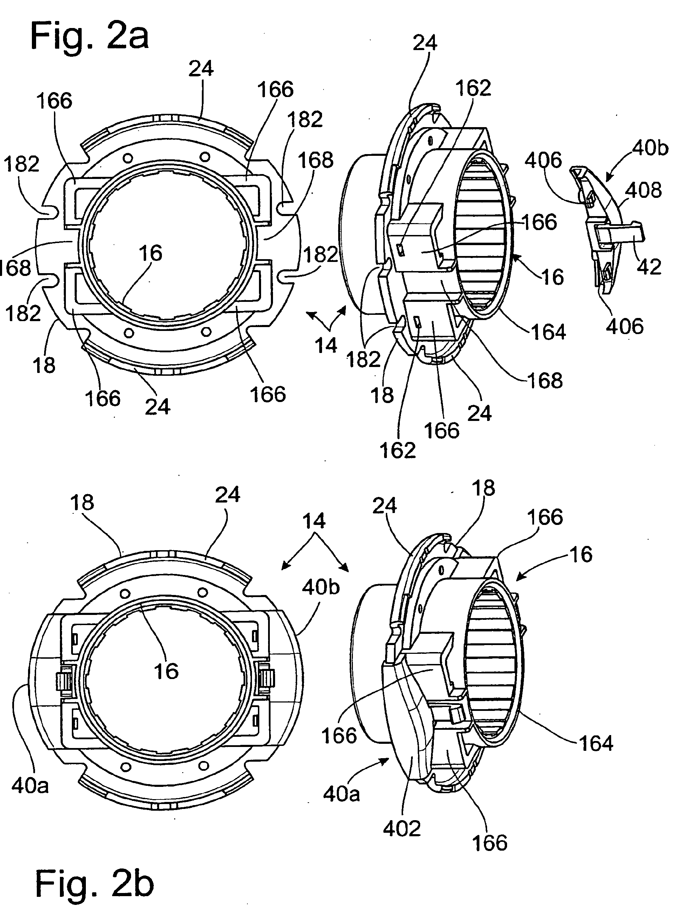

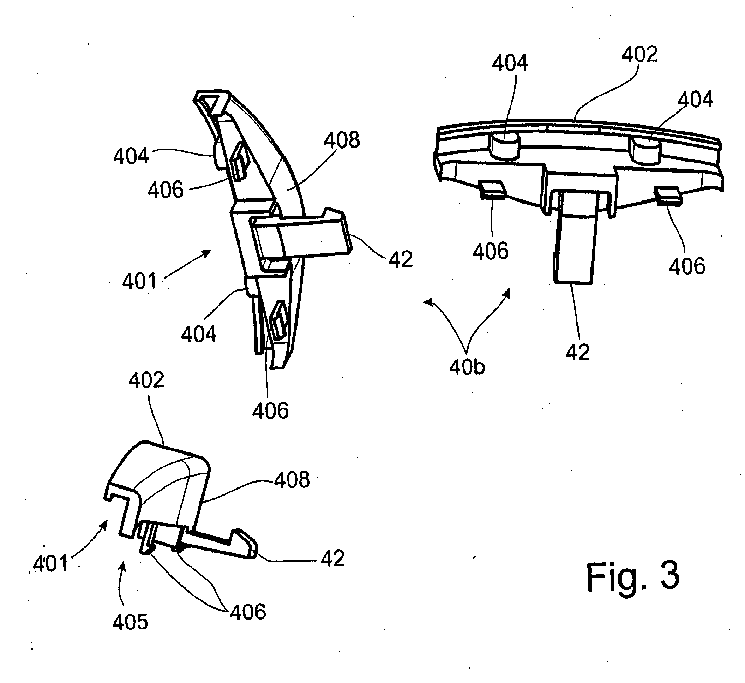

Die Fig. 2a, b zeigen die mit Fig. 1 dargestellte Schiebehülse 14 mit dem Trägerelement 16 und mit zwei Anbauteilen 40a,b vor und nach deren Montage an dem Radialflansch 18. Ein solches Anbauteil 40b, das in Fig. 3 vergrößert dargestellt ist, ist als Kunststoffteil unter Verwendung eines Thermoplastwerkstoffes in Form eines Kreisscheibensegmentes konzipiert, dessen zur Verbindung mit dem Radialflansch 18 vorgesehene Rückseite 401 zwei nasenartige, von einem äußeren Wandungsabschnitt 402 überdeckte Vorsprünge 404 aufweist, welche von radial außen kommend in zwei dazu am Radialflansch 18 ausgebildete Ausnehmungen 182 (siehe Fig. 2a, b) eingreifen können. Zu diesen Vorsprüngen 404 sind an einer Unterseite 405 des Anbauteils 40b zwei gleichgerichtete voneinander beabstandete Rasthaken 406 ausgebildet, die bei der Montage des Anbauelements 40b in zwei, an dem Trägerelement 16 der Schiebehülse 14 ausgebildete Rastöffnungen 162 (siehe Fig. 2a) eintauchen und dieses hintergreifen können und die Anbauteile 40a, b im Zusammenwirken mit den Vorsprüngen 404 verliersicher an der Schiebehülse 14 fixieren. Die Rastöffnungen 162 sind ihrerseits in von einem Rohrabschnitt 164 des Trägerelements 16 radial abstehenden und über dem Außendurchmesser des Rohrabschnittes 164 überstehenden Befestigungsabschnitten 166 ausgebildet. Diese Befestigungsabschnitte 166 sind spiegelsymmetrisch jeweils paarweise am Trägerelement 16 vorgesehen, wobei die jeweils zu einem Paar gehörenden Befestigungsabschnitte 166 eine gemeinsame Anlagefläche zur Anlage an dem Kupplungshebel 44 bilden.

Zwischen den Rasthaken 406 ist ebenfalls an der Unterseite 405 der axial abstehende Rasthaken 42 zur verliersicheren Anordnung des Kupplungshebel 44 erkennbar. Der letztere Rasthaken 42 kann an der Ausrückvorrichtung 10 in eine zwischen den Rastöffnungen 162 des Trägerelements 16 vorgesehenen Freiraum 168 eintauchen. Fig. 2b zeigt den montierten Zustand des Anbauteils 40a, wobei dessen äußerer Wandungsabschnitt 402 den Radialflansch 18 in diesem Umfangsbereich umgreift. Es ist weiter erkennbar, dass die Anbauteile 40a,b in axialer, von dem Ausrücklagers 20 abgewandten Richtung eine konvex gewölbte Oberfläche 408 aufweisen, damit der dort zur Anlage gelangende Kupplungshebel 44 bei einer Betätigung der Kupplung nahezu reibungslos abgewälzt werden kann.

Das Anbauelement 40 ist in dem erläuterten Beispiel zweiteilig mit den Anbauteilen 40a, b ausgeführt, welche getrennt und voneinander unabhängig am Trägerelement 16 angeordnet werden. Es ist alternativ dazu auch möglich, dieses einteilig mit zwei Anlagebereichen für ein Betätigungselement zu gestalten.

Fig. 4 zeigt eine perspektivische Darstellung der montierten Ausrückvorrichtung 10 mit dem Ausrücklager 20, welches mit der Halteklammer 22 am Ringkragen 24 des Radialflansches 18 gehalten wird und sich an diesem zur Ermöglichung einer Selbstjustage lateral verlagern kann.

Fig. 5 zeigt eine Frontansicht einer aus der Ausrückvorrichtung 10 und dem Kupplungshebel 44 gebildeten vormontierten Baueinheit. Der Kupplungshebel 44 ist in dessen Mittenbereich mit einer etwa langlochförmigen Ausnehmung 442 versehen, an deren parallelen Längsseiten 444 jeweils ein länglicher Muldenbereich 446 zum Eingriff der Rasthaken 42 ausgebildet ist. Diese Muldenbereiche 446 sind in der Erstreckungsrichtung der Ausnehmung 442 größer als die Rasthaken 42 ausgebildet, so dass beim Ausrücken genügend Bewegungsspielraum für den Kupplungshebel 44 gegeben ist. Ferner ist in Fig. 5 erkennbar, dass die jeweils von einem Paar der Befestigungsabschnitte 166 gebildete Anlagefläche ebenfalls an den Längsseiten 444, jedoch in der zur Erstreckung der Ausnehmung 442 senkrechten Richtung im Wesentlichen spielfrei anliegt.

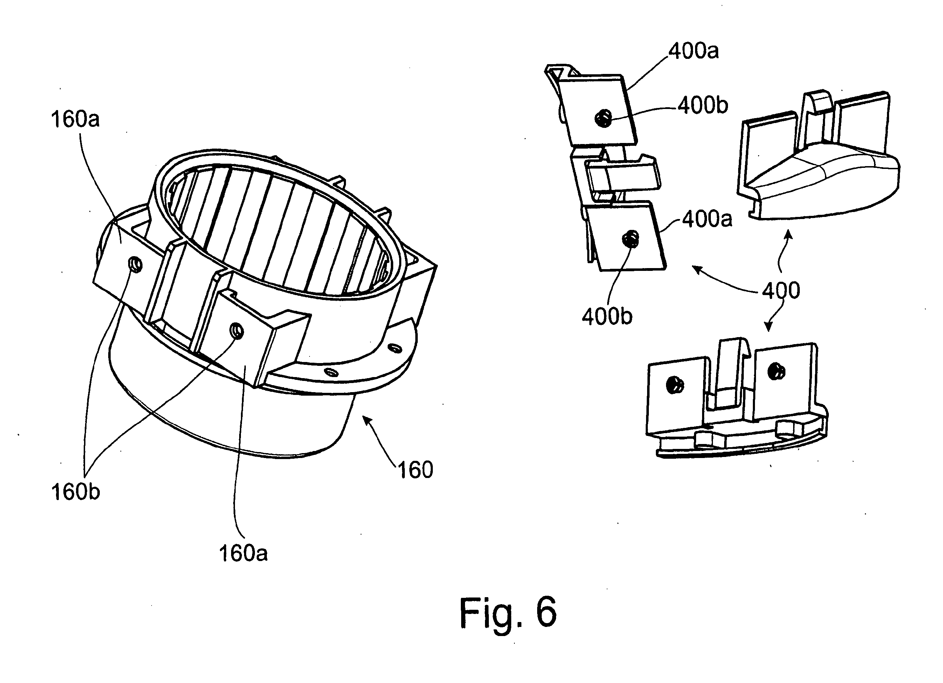

Fig. 6 zeigt eine Darstellung einer gegenüber Fig. 2 modifizierten Rastverbindung von einem Trägerelement 160 und einem Anbauteil 400, wobei anstelle der Rasthaken 406 (siehe Fig. 3) an dem Anbauteil 400 zwei axial abstehende Flächenelemente 400a mit jeweils einer davon abstehenden, im Querschnitt runden Schnappkontur 400b vorgesehen sind, welche in an den Befestigungsbereichen 160a ausgebildete kreisförmige Öffnungen 160b eingeführt und dort verschnappt bzw. verrastet werden können. Für weitere Details der dargestellten Elemente 160, 400 und deren Funktion wird auf die vorstehende Beschreibung verwiesen.

### Bezugszeichenliste

- 10: Ausrückvorrichtung
- 12: Führungsrohr
- 14: Schiebehülse
- 16: Trägerelement
- 160: Trägerelement
- 160a: Befestigungsbereich
- 160b: Öffnung
- 162: Rastöffnung
- 164: Rohrabschnitt
- 166: Befestigungsabschnitt
- 168: Freiraum
- 18: Radialflansch
- 18a: Aufnahmebereich
- 182: Ausnehmung
- 20: Ausrücklager
- 22: Halteklammer
- 24: Ringkragen
- 26: Lageraußenring
- 28: Wälzkörper
- 30: Lagerinnenring
- 32: Betätigungsorgan
- 34: Radialflansch
- 36: Anlaufscheibe
- 38: Anlagebereich
- 40: Anbauelement
- 400: Anbauteil
- 400a: Flächenelement
- 400b: Schnappkontur
- 40a,b: Anbauteil
- 401: Rückseite
- 402: Wandungsabschnitt
- 404: Vorsprung
- 405: Unterseite
- 406: Rasthaken
- 408: konvexe Oberfläche
- 42: Rasthaken
- 44: Kupplungshebel
- 442: Ausnehmung
- 444: Längsseite
- 446: Muldenbereich
- A: Ausrückachse

## Patentansprüche

1. Ausrückvorrichtung (10) für eine Reibungskupplung eines Kraftfahrzeuges, umfassend
- ein Führungsrohr (12),
- eine auf dem Führungsrohr (12) axial verlagerbare, mehrteilig ausgeführte Schiebehülse (14) mit
- einem Trägerelement (16) zur Anordnung auf dem Führungsrohr (12) und mit
- einem an dem Trägerelement (16) angeordneten Radialflansch (18), der einen Aufnahmebereich (18a) für ein koaxial an der Schiebehülse (14) angeordnetes Ausrücklager (20) bildet mit einem drehfest zu der Schiebehülse (14) angeordneten ersten Lagerring (26), Wälzkörpern (28) und einem umlaufenden zweiten Lagerring (30), der mit einem Betätigungsorgan (32) der Reibungskupplung in Wirkverbindung steht und mit
- einem an dem Radialflansch (18) montierbaren Anbauelement (40), welches einen Anlagebereich (38) für ein Betätigungselement zur Aufnahme einer Betätigungskraft bereitstellt,
**dadurch gekennzeichnet,**
**dass** das Anbauelement (40) als Kunststoffteil ausgeführt ist.

2. Ausrückvorrichtung nach Anspruch 1,
**dadurch gekennzeichnet,**
**dass** das Trägerelement (16) einen zur Anordnung auf dem Führungsrohr (12) vorgesehenen Kunststoffkörper umfasst.

3. Ausrückvorrichtung nach Anspruch 1 oder 2,
**dadurch gekennzeichnet,**
**dass** das Trägerelement (16) als Kunststoff-Metall-Verbundteil ausgeführt ist.

4. Ausrückvorrichtung nach einem der Ansprüche 1-3,
**dadurch gekennzeichnet,**
**dass** der Radialflansch (18) aus einem metallischen Werkstoff gefertigt ist.

5. Ausrückvorrichtung nach einem der Ansprüche 1-4,
**dadurch gekennzeichnet,**
**dass** der Radialflansch (18) zumindest teilweise kunststoffumspritzt ist.

6. Ausrückvorrichtung nach einem der Ansprüche 1-5,
**dadurch gekennzeichnet,**
**dass** das Anbauelement (40) mittels einer Rastverbindung an der Schiebehülse (14) verliersicher angeordnet ist.

7. Ausrückvorrichtung nach einem der Ansprüche 1-6,
**dadurch gekennzeichnet,**
**dass** das Anbauelement (40) unter Verwendung eines Thermoplastwerkstoff gefertigt ist.

8. Ausrückvorrichtung nach einem der Ansprüche 1-7,
**dadurch gekennzeichnet,**
**dass** das Anbauelement (40) eine Haltevorrichtung (42) zur verliersicheren Anordnung des Betätigungselementes umfasst.

9. Ausrückvorrichtung nach einem der Ansprüche 1-8,
**dadurch gekennzeichnet,**
**dass** das Anbauelement (40) zweiteilig mit Anbauteilen (40a, b) ausgeführt ist, wobei die Anbauteile (40a, b) symmetrisch zur Mittelachse an der Schiebehülse (14) angeordnet sind.

10. Ausrückvorrichtung nach einem der Ansprüche 1-9,
**dadurch gekennzeichnet,**
**dass** der Anlagebereich (38) des Anbauelements (40) oder der Anbauteile (40a,b) konvex gewölbt ausgeführt ist.

## Claims

1. Disengagement device (10) for a friction clutch of a motor vehicle, comprising
- a guide tube (12),
- a multi-part sliding sleeve (14), which is axially movable on the guide tube (12), having
- a support element (16) for arranging on the guide tube (12) and having
- a radial flange (18) which is arranged on the support element (16) and which forms a receiving region (18a) for a disengagement bearing (20), which disengagement bearing is arranged coaxially on the sliding sleeve (14) and has a first bearing ring (26) arranged for conjoint rotation with the sliding sleeve (14), has rolling bodies (28), and has an encircling second bearing ring (30) which is operatively connected to an actuating member (32) of the friction clutch, and having
- an attachment element (40) which can be mounted on the radial flange (18) and which provides a contact region (38) for an actuating element for absorbing an actuating force,
**characterized**
**in that** the attachment element (40) is formed as a plastic part.

2. Disengagement device according to Claim 1, **characterized**
**in that** the support element (16) comprises a plastic body provided for arranging on the guide tube (12).

3. Disengagement device according to Claim 1 or 2,
**characterized**
**in that** the support element (16) is formed as a plastic-metal composite component.

4. Disengagement device according to one of Claims 1-3,
**characterized**
**in that** the radial flange (18) is produced from a metallic material.

5. Disengagement device according to one of Claims 1-4,
**characterized**
**in that** the radial flange (18) is at least partially extrusion-coated with plastic.

6. Disengagement device according to one of Claims 1-5,
**characterized**
**in that** the attachment element (40) is arranged in a captively retained manner on the sliding sleeve (14) by means of a latching connection.

7. Disengagement device according to one of Claims 1-6,
**characterized**
**in that** the attachment element (40) is produced using a thermoplastic material.

8. Disengagement device according to one of Claims 1-7,
**characterized**
**in that** the attachment element (40) comprises a holding device (42) for the captively retained arrangement of the actuating element.

9. Disengagement device according to one of Claims 1-8,
**characterized**
**in that** the attachment element (40) is formed in two parts with attachment parts (40a, b), the attachment parts (40a, b) being arranged on the sliding sleeve (14) symmetrically with respect to the central axis.

10. Disengagement device according to one of Claims 1-9,
**characterized**
**in that** the contact region (38) of the attachment element (40) or of the attachment parts (40a, b) is of convexly curved design.

## Revendications

1. Dispositif de débrayage (10) pour un embrayage à friction d'un véhicule automobile, comprenant :
- un tube de guidage (12),
- un manchon coulissant (14) réalisé en plusieurs parties, pouvant être déplacé axialement sur le tube de guidage (12), avec
- un élément de support (16) devant être disposé sur le tube de guidage (12) et comprenant
- une bride radiale (18) disposée sur l'élément de support (16), qui forme une région de réception (18a) pour un palier de débrayage (20) disposé coaxialement sur le manchon coulissant (14), avec une première bague de palier (26) disposée de manière solidaire en rotation par rapport au manchon coulissant (14), des corps de roulement (28) et une deuxième bague de palier périphérique (30), qui est en liaison fonctionnelle avec un organe d'actionnement (32) de l'embrayage à friction, et comprenant
- un élément de montage (40) pouvant être monté sur la bride radiale (18), lequel fournit une région d'appui (38) pour un élément d'actionnement pour recevoir une force d'actionnement,
**caractérisé en ce que**
l'élément de montage (40) est réalisé sous forme de pièce en plastique.

2. Dispositif de débrayage selon la revendication 1,
**caractérisé en ce que**
l'élément de support (16) comprend un corps en plastique prévu pour être disposé sur le tube de guidage (12).

3. Dispositif de débrayage selon la revendication 1 ou 2,
**caractérisé en ce que**
l'élément de support (16) est réalisé sous forme de pièce composite plastique-métal.

4. Dispositif de débrayage selon l'une quelconque des revendications 1 à 3,
**caractérisé en ce que**
la bride radiale (18) est fabriquée en un matériau métallique.

5. Dispositif de débrayage selon l'une quelconque des revendications 1 à 4,
**caractérisé en ce que**
la bride radiale (18) est au moins en partie surmoulée avec du plastique.

6. Dispositif de débrayage selon l'une quelconque des revendications 1 à 5,
**caractérisé en ce que**
l'élément de montage (40) est disposé de manière imperdable au moyen d'une connexion par encliquetage sur le manchon coulissant (14).

7. Dispositif de débrayage selon l'une quelconque des revendications 1 à 6,
**caractérisé en ce que**
l'élément de montage (40) est fabriqué en utilisant un matériau thermoplastique.

8. Dispositif de débrayage selon l'une quelconque des revendications 1 à 7,
**caractérisé en ce que**
l'élément de montage (40) comprend un dispositif de retenue (42) pour la disposition imperdable de l'élément d'actionnement.

9. Dispositif de débrayage selon l'une quelconque des revendications 1 à 8,
**caractérisé en ce que**
l'élément de montage (40) est réalisé en deux parties avec des parties de montage (40a, b), les parties de montage (40a, b) étant disposées de manière symétrique par rapport à l'axe médian sur le manchon coulissant (14).

10. Dispositif de débrayage selon l'une quelconque des revendications 1 à 9,
**caractérisé en ce que**
la région d'appui (38) de l'élément de montage (40) ou des parties de montage (40a, b) est réalisée avec une courbure convexe.
